# EUROPEAN PATENT APPLICATION

(11) **EP 1 323 680 A1**
(43) Date of publication of application: **02.07.2003**
(21) Application number: 02027261.3
(22) Date of filing: 06.12.2002
(51) Int. Cl.: C02F 3/12, C02F 1/44, C02F 9/00

(54) **Method for recovering nitrates from percolating waters coming from solid urban waste materials**

(30) Priority: 11.12.2001 IT MI20012610
(71) Applicant: Ionics Italba S.P.A., 20139 Milano (IT)
(72) Inventor: Vaccaro, Guido, 20133 Milano (IT); Ferri, Carlo, 20090 Segrate (IT)
(74) Representative: Cicogna, Franco

(57) **Abstract**

The present invention relates to a method for recovering nitrates from percolating waters coming from solid urban waste materials, or a preset fraction thereof, comprising the steps of subjecting said percolating waters to an aerobic process for oxidating the organic materials contained therein and for nitrificating ammonia and precursors thereof present in said waters, subjecting the processed waters to a further reverse osmosis process, for separating a re-usable permeate and a concentrate material rich in dissolved salts.

## Description

### BACKGROUND OF THE INVENTION

The present invention relates to a method for recovering nitrates from percolating waters coming from solid urban waste materials or a preset fraction thereof.

As is known, percolate materials which are generated from urban solid wastes, comprises a comparatively high concentration of ammonia and carbon, and cause at present a lot of problems for properly disposing of them.

Such a disposal of procedure, involves a high disposal of cost, which negatively affect the managing of the process.

### SUMMARY OF THE INVENTION

Accordingly, the aim of the present invention is to overcome the above mentioned drawbacks, by providing a method for recovering nitrates from percolating water coming from urban solid wastes or a preselected fraction thereof, allowing to perform a process suitable to provide a product which can be used on waste composting masses, to reduce the bad odors therefrom, while allowing to provide a good quality water which can be used for several further applications.

Within the scope of the above mentioned aim, a main object of the present invention is to provide such a method allowing to obtain a mixed composted material, having very high agronomic properties.

Yet another object of the present invention is to provide such a method which, owing to its specifically designed features, is very safe and reliable in operation.

Yet another object of the present invention is to provide such a method which can be managed in a simple and economic manner, thereby consequently optimizing all of the operating parameters of the method.

According to one aspect of the present invention, the above mentioned aim and objects, as well as yet other objects, which will become more apparent hereinafter, are achieved by a method for recovering nitrates from percolating waters coming from urban solid waste or a preset fraction thereof, characterized in that said method comprises the steps of subjecting said percolating waters to an aerobic process for nitrificating ammonia present in said waters and oxidating further organic materials in said waters, subjecting the processed waters to a further reverse osmosis process thereby separating a reusable permeate material and a nitrate-rich concentrate material.

### BRIEF DESCRIPTION OF THE DRAWINGS

Further characteristics and advantages of the present invention will become more apparent hereinafter from the following detailed disclosure of a preferred, though not exclusive, embodiment of a method for recovering nitrates from percolating waters coming from solid urban waste materials or a preset fraction thereof, which is illustrated, by way of an indicative, but not limitative, example, in the accompanying drawings, where:

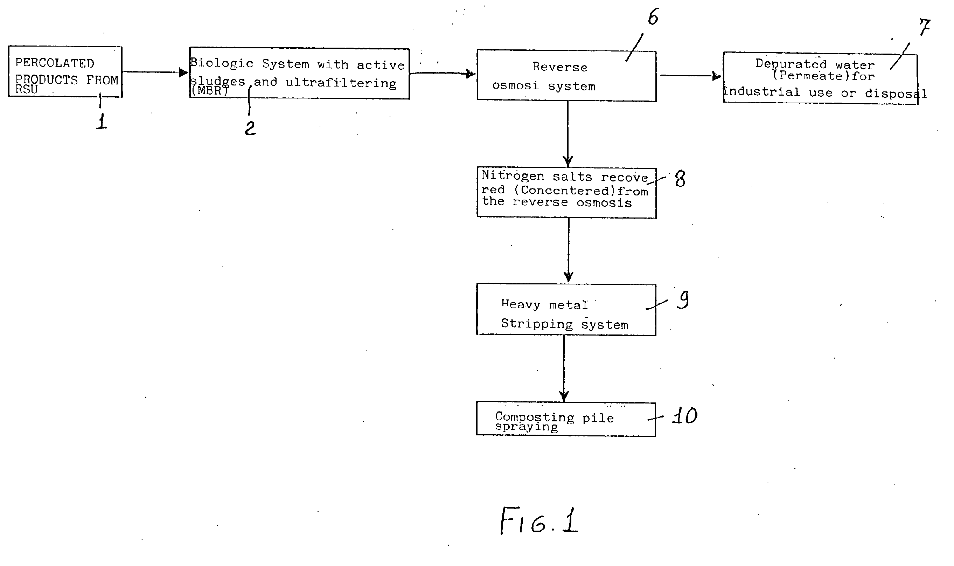

Figure 1 shows an operating diagram of the method including an active-sludge biologic system, provided with ultra filtering means;

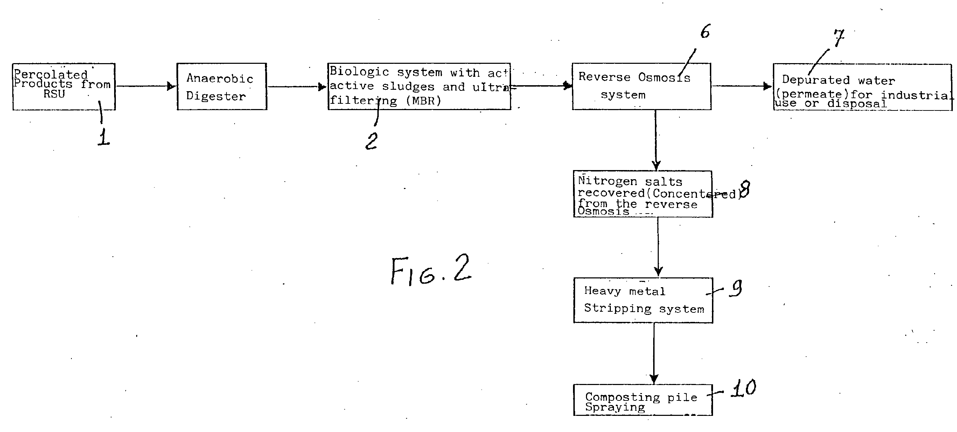

Figure 2 shows a schematic diagram of a method by which is carried out a preliminarily anaerobic operating step;
Figure 3 illustrates a schematic diagram of a method performed in an active-sludge biologic system, provided with sludge settling means; and

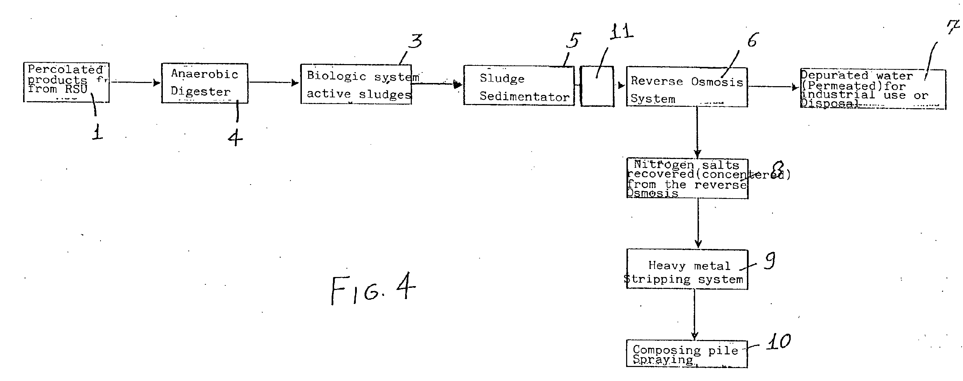

Figure 4 illustrates a further schematic diagram of a method in which is carried out a preliminarily anaerobic operating step or operation.

### DESCRIPTION OF THE PREFERRED EMBODIMENTS

With reference to the above mentioned figures, the method according to the invention for recovering nitrates from percolating waters coming from solid urban waste materials or a preset fraction thereof, comprises a step of performing a biologic process, in a full nitrification conditions, which is so carried out as to fully nitrificating ammonia and precursors thereof present in the percolated waters, so as to transform them into nitrates, while simultaneously oxidating the organic materials present in said waters.

The percolate materials, which have been generally indicated at the block 1 in the accompanying drawings, are subjected to the oxidation and nitrification process by optionally using an ultrafiltering system for ultra-filtering the active sludges, said system being indicated at the reference number 2, in particular by using semipermeable membranes, immersed in the oxidating basins.

The ultrafiltering process would allow to separate the sludges directly in the oxidating basin, without the need of using a clarifying device arranged downstream of said oxidating basin.

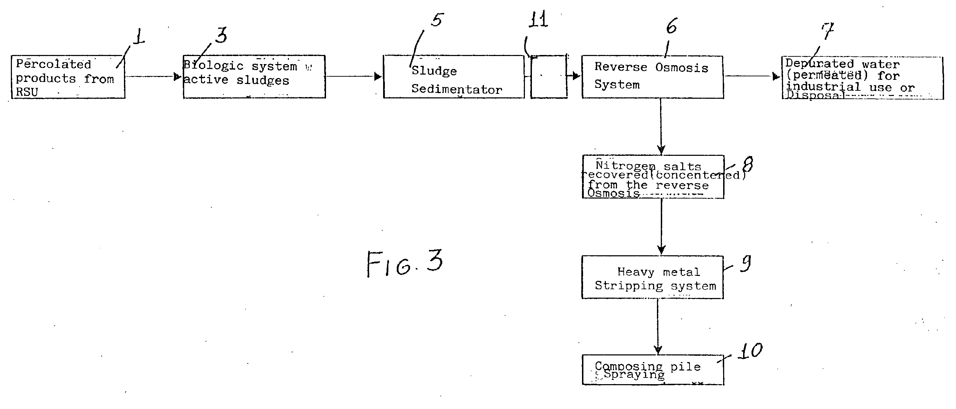

The biologic treatment, as shown, for example, in the schematic diagram of figure 3, can be performed in an active-sludge system 3, of any desired conventional types, with an oxidation of the residue materials, followed by a sludge settling and recirculating step.

Before the biologic treatment step, it would be possible to provide an anaerobic system including a digestor 4, suitable to provide a great reduction of the organic materials, with development of biogas and with a consequent possibility of easily performing any power recovering operations.

Downstream of the digestor device, in particular, an anaerobic processing system will be arranged.

Downstream of the active-sludge biologic aerobic system, which can be provided with means for separating the biomasses by settling or ultrafiltering, it would be moreover possible to provide a further settling and/or filtering step 11, before the inlet to the reverse osmosis system 6.

The reverse osmosis system 6, in particular, owing to the applied pressure, will separate the processed water into a permeate, indicated by the reference number 7, comprising good quality clarified water, devoid of colloidal materials and bacteria, as well as organic substances, and into a concentrate 8 including all of the impurities.

In particular, the permeate material can be reused inside said system as service water, antifire system water and so on.

If heavy metals would be present in the concentrate material from the reverse osmosis, then said heavy metals will be stripped or removed by a heavy metal stripping system 9, including conventional stripping means.

The reverse osmosis concentrate, rich in nitrates, can be used for spraying composting waste piles or masses, as generally indicated at the reference number 10 in the accompanying drawings.

Said composting masses, in particular, are subjected to a first step of aerating and moistening, to provide a degradation of the organic substances therein contained by aerobic microorganisms, while reducing the bad odor gaseous evolved substances.

Optimum contents of moisture as necessary for a microbic population suitable to metabolize the organic materials, would be included in a 50-70% range.

Thus, the required moistening of the organic waste masses would constitute per se a depurating system proper.

The supplied nitrates will favor, in this operating step, greater nitrogen contents in the mixed composted material, thereby increasing their intrinsic agronomic value.

Moreover, if anoxic pockets would be formed in said composting masses, then the spraying of nitrates would make oxygen available for the composting population, so as to greatly reduce the development of bad odors.

From the above disclosure it should be apparent that the invention fully achieves the intended aim and objects.

In particular, the invention provides a method eliminating the cost which will be necessary for disposing of the reverse osmosis concentrate material.

Said method, moreover, allows to provide a mixed composted material, having high agronomic properties and allowing to produce very good quality water, while reducing the bad odors in the composting waste masses.

The invention, as disclosed, is susceptible to several modifications and variations, all of which will come within the scope of the invention.

Moreover, all the process steps can be replaced by other technically equivalent process steps.

In practicing the invention, the used materials, as well as the contingent size and shapes of the system can be any depending on requirements.

## Claims

1. A method for recovering nitrates from percolating waters coming from urban solid waste or a preset fraction thereof, **characterized in that** said method comprises the steps of subjecting said percolating waters to an aerobic process for nitrificating ammonia present in said waters and oxidating further organic materials in said waters, subjects the processed water to a further reverse osmosis process thereby separating a reusable permeate material and a nitrate-rich concentrate material.

2. A method, according to the preceding claim, **characterized in that** said aerobic process is carried out in an active-sludge system with separating means and ultrafiltering means for separating and ultrafiltering the biomass being processed, by using semipermeable membranes either immersed or not in oxidating basins.

3. A method, according to Claims 1 and 2, **characterized in that** said aerobic process is carried out in an active-sludge system having separating means for separating the biomass by settling and recirculating the sludge.

4. A method, according to one or more of the preceding claims, **characterized in that** said method comprises an anaerobic processing step, carried out before the aerobic process or treatment, for reducing the organic materials and forming biogas.

5. A method, according to one or more of the preceding claims, **characterized in that** said method further comprises the step of carrying out a settling and/or filtering step downstream of said aerobic processing step.

6. A method, according to one or more of the preceding claims, **characterized in that** said method further comprises the step of subjecting the concentrate material deriving from the reverse osmosis to a stripping step for stripping heavy metals present in said concentrate material.

7. A method, according to one or more of the preceding claims, **characterized in that** the concentrate material derived from said reverse osmosis is used for spraying composting waste masses.

8. A method for recovering nitrates from percolating waters coming from solid urban waste materials, or a preset fraction thereof, and substantially as broadly disclosed and illustrated and for the intended aim and objects.
